# EUROPEAN PATENT APPLICATION

(11) **EP 4 586 030 A1**
(43) Date of publication of application: **16.07.2025**
(21) Application number: 23863389.5
(22) Date of filing: 24.08.2023
(51) Int. Cl.: G05B 19/418, G05B 13/04, G05B 23/02

(54) **SIMULATION SYSTEM AND METHOD FOR REAL-TIME TRACKING OF POWER PLANT STATUS BASED ON POWER PLANT FIELD VALUES**

(30) Priority: 05.09.2022 KR 20220112083
(71) Applicant: Korea Hydro & Nuclear Power Co., Ltd, Gyeongju-si, Gyeongsangbuk-do 38120 (KR)
(72) Inventor: KIM, Taejoon, Seoul 01742 (KR); JANG, You Hyun, Sejong 30147 (KR); KIM, Dae Woong, Sejong 30124 (KR)
(74) Representative: Habermann, Hruschka & Schnabel
(86) International application number: PCT/KR2023/012537
(87) International publication number: WO 2024/053913

(57) **Abstract**

The present invention relates to a simulation system for simulating the behavior of a power plant, the system being characterized by: collecting all field values in the power plant at an nth point in time; simulating the behavior of the power plant at the nth point in time through a numerical analysis of a power plant model on the basis of the collected field values; providing, as a second initial condition, a field value obtained through the numerical analysis of the power plant model; and determining a simulation calculation method according to the result of comparing the power plant field values and a simulation calculation value.

## Description

### Technical Field

The present disclosure relates to a simulation system for simulating the behavior of a power plant.

### Background Art

Simulators for power plants have been developed and used mainly to train operators for the safe operation of the power plants after the construction thereof, but are now used as test beds to reduce trial and error in the field by conducting control logic tests, HMI tests, tests to improve existing control logic, etc. before applying the digital control systems of the power plants to the field.

Here, the variable values refer to the values of sensing signals measured by multiple sensors installed in the equipment of power plants, and plant information includes information on how the devices installed in a plant are organized. In addition, conditions related to plant evaluation, such as plant operating environment information and operating pattern information, are recorded along with performance models of all devices. The performance model includes performance information such as mass balance, heat balance, thermal efficiency, and output of each device or design values of heat balance, thermal efficiency resulting from heat balance, and output of multiple devices.

Simulators for power plants develop a process model, a control model, and a screen for operators based on design data of a power plant to be developed (isometric drawings, control logic diagram, heat balance etc.) and operation data (screens for operation of control systems, performance data, etc.)

In particular, simulators for nuclear power plants are a simulation training device that allows operators to practice in an environment simulating the actual field based on a high level of safety and precision, and are a facility for cultivating the operating capabilities of operators of power plants, verifying and developing operating procedures, prior inspection and safety analysis of control techniques, improving operating methods, etc. In addition, simulators for nuclear power plants have a function to set external environmental variables, which is one of the main functions of an instructor control board of a simulator.

However, it is physically impossible for users to manually input and reflect changes that occur simultaneously in nature through the function to set external environmental variables of the instructor control board, so such changes cannot be included in simulation.

In addition, in terms of the external environmental variables set by the instructor control board, there is often a discrepancy between the standard data reflected at the time of designing a power plant and the data reflected at the time of developing and using the simulator of the power plant, and it is difficult to reflect ever-changing variables in the operation of the simulator.

Therefore, it is difficult to bring and simulate changing conditions in real time during the operation of a power plant.

In addition, typically, in the case of a simulator of a power plant, the initial conditions of the simulation system of the power plant are specified in the form of a pre-classified scenario according to the operating environment in the information input file of a system, and the setup of the system model related thereto is always analyzed only under already specified conditions. As a result, dynamic conditions based on the actual state of the power plant system that changes in real time cannot be applied

As such, in the case of simulators for nuclear power plants for training operators, which have been developed as a simulation program for simulating the behavior of primary and secondary systems of nuclear power plants, under the specified conditions, fast calculation and relatively high accuracy have been secured, but there are many limitations in predictive simulation of power plants because the initial conditions for the simulation need to be created through a separate process and the simulation is performed according to a pre-prepared operation scenario.

### Related Art Literature

### Patent Literature

(Patent Literature 1) Korean Patent Application Publication No. 10-2015-0021970 (titled "Method and System for Predicting the Performance of a Ship" and filed by ABB Technology AG)
(Patent Literature 2) Korean Patent Publication No. 10-1837653 (titled "Power Plant Simulator" and filed by Korea Electric Power Corporation)
(Patent Literature 3) Japanese Patent Publication No. 5349194 (titled "Operation Verification Test Apparatus and Method for Plant Operation Monitoring Control Apparatus" and filed by Toshiba Corp)

### Disclosure

### Technical Problem

In order to solve the aforementioned problems, the present disclosure has been made in an effort to provide a simulation system capable of tracking the status of a power plant in real time by optimizing a simulation model that reflects a power plant field value when there is a difference between a field value calculated through simulation and the power plant field value.

In order to solve the aforementioned problems, the present disclosure has been made in an effort to provide a simulation system capable of tracking the behavior of a power plant in real time even under conditions other than the conditions in a predetermined scenario by setting the status of the power plant at the current time as the initial conditions without creating separate initial conditions for simulation even under operating conditions other than the conditions in the predetermined scenario during, during a simulation for simulating the behavior of the primary and secondary systems of the power plant.

### Technical Solution

According to an aspect of the present disclosure, a simulation system for tracking the status of a power plant in real time may include an operation information DB management unit that collects power plant field values at an nth time point - the "n" is an integer; an integrated simulation module that simulates the behavior of a power plant based on field values converged by numerical analysis of a power plant model using the power plant field values at the nth time point as input; an initial condition DB management unit that retrieves the power plant field values at the nth time point and converged field values meeting conditions within a predetermined range from the field values converged by the numerical analysis of the power plant model and provides the converged field values as an initial condition field value of the simulation of the integrated simulation module; a calculation method determination unit that determines a calculation method for the simulation of the integrated simulation module based on the results of comparing the power plant field values at the nth time point and the simulation calculation value of the integrated simulation module; and a simulation correction unit that reflects the power plant field values at the nth time point and corrects parameters related to the main variables of a simulation model in the integrated simulation module when the difference between the power plant field value at the nth time point and the simulation calculation value of the integrated simulation module is outside a predetermined error range. In addition, examples of the simulation calculation method may include a simulation-based method where the power plant field values at the nth time point are predicted in real time and an overriding-based method where the corrected parameters of the simulation model are applied so that the field values converged by the numerical analysis of the power plant model match the power plant field values at the nth time point.

The operation information DB management unit may select a variable to be compared with the simulation calculation value from the power plant field values at the nth time point and remove errors in equipment that measures the power plant field values at the nth time point by correcting the selected variable.

The integrated simulation module may include primary and secondary systems, control logic, and electricity and power models in a power plant and include a simulator for training operators that simulates the entire behavior of the power plant in real time.

When starting to do calculations by the overriding-based method, the integrated simulation module may select, as the initial condition field value of the simulation, the field value closer to the power plant field value at the nth time point among the initial condition field value provided by the initial condition DB management unit and the field value calculated by the simulation-based method before switching to the overriding-based method.

When the overriding-based method is applied, the initial condition DB management unit may retrieve a field value with accuracy within a predetermined range from the power plant field values at the nth time point, which have been provided by the operation information DB management unit, and may define the searched filed value as a first initial condition and provide it to the integrated simulation module.

When the overriding-based method is applied, the integrated simulation module may input a field value matching the main variable among the power plant field values at the nth time point as a virtual boundary condition for the main variable of the simulation model, may start to do calculations with the initial condition field value, and may do the calculations by receiving correction values of parameters related to the main variable of the simulation model from the simulation correction unit so that the main variable converges to the virtual boundary condition.

When the overriding-based method is applied, the integrated simulation module may also do calculations repeatedly while adjusting parameters related to the variables of the simulation model based on the first initial condition provided by the simulation correction unit until the variables of the simulation model converge to the power plant field values at the nth time point corresponding to the variables of the simulation model.

When the variables of the simulation model converge to the power plant field values at the nth time point corresponding to the variables with an accuracy within a predetermined range based on the first initial condition, the calculation method determination unit may output the variables as a second initial condition of the simulation model and provide them to the initial condition DB management unit.

The integrated simulation module may perform simulation based on the second initial condition provided by the initial condition DB management unit and the power plant field values received at an n+1th time point.

According to another aspect of the present disclosure, a simulation method for tracking the status of a power plant in real time may include collecting operation information through an operation information DB management unit collecting power plant field values at an nth time point; simulating the behavior of a power plant based on field values converged by numerical analysis of a power plant model using the power plant field values at the nth time point as input, through an integrated simulation module; searching for the power plant field values at the nth time point and converged field values meeting conditions within a predetermined range from the field values converged by the numerical analysis of the power plant model and providing the converged field values as an initial condition field value of the simulation of the integrated simulation module, through an initial condition DB management unit that; determining a calculation method for the simulation of the integrated simulation module based on the results of comparing the power plant field values at the nth time point and the simulation calculation value of the integrated simulation module, through a calculation method determination unit; and reflecting the power plant field values at the nth time point and correcting parameters related to the main variables of a simulation model in the integrated simulation module through a simulation correction unit when the difference between the power plant field value at the nth time point and the simulation calculation value of the integrated simulation module is outside a predetermined error range. In addition, examples of the simulation calculation method may include a simulation-based method where the power plant field values at the nth time point are predicted in real time and an overriding-based method where the corrected parameters of the simulation model are applied so that the field values converged by the numerical analysis of the power plant model match the power plant field values at the nth time point.

### Advantageous Effects

According to the present disclosure, it may be possible to track the state of a power plant in real time and predict the behavior of the power plant using the state of the power plant at the time of the operation of the power plant as an initial condition, through a simulation system that brings the operation information of the power plant in real time and reflects the real-time status of the power plant without an operating scenario instead of doing calculations by assuming initial conditions according to a predetermined scenario.

According to the present disclosure, it may be possible to precisely analyze, monitor, and inspect the status of the operation of the main systems/devices of a power plant through a system that tracks the status of the power plant in real time to continuously secure simulation accuracy without separate intervention from managers.

According to the present disclosure, it may be possible to adjust the operation and control of the major systems of a power plant in advance and analyze the behavior by simulating the status of the power plant at the current time in order to derive optimal operating conditions and prevent trial and error, thereby securing operators' ability to respond to accident conditions and abnormal situations.

According to the present disclosure, as a system for simulating a power plant system in real time is secured, it may be possible to precisely analyze the performance of each of the major systems and devices in a power plant and to predict the performance and lifespan of each of the devices and manage the devices by reflecting information on the status of the power plant.

### Description of Drawings

FIG. 1 is a block diagram for showing all components of a simulation system that brings field values of a power plant and tracks the status of the power plant in real time according to an embodiment of the present disclosure.
FIG. 2 is a flowchart for showing how the simulation system does calculations through a simulation-based method according to an embodiment of the present disclosure.
FIG. 3 is a flowchart for showing how the simulation system does calculations through an overriding-based method according to an embodiment of the present disclosure.
FIG. 4 is a flowchart for showing how an integrated simulation module brings information on the operation of a power plant when the simulation system does calculations through the overriding-based method according to an embodiment of the present disclosure.

### Mode for Disclosure

Hereinafter, the desirable embodiments of the present disclosure will be described in detail with reference to the accompanying drawings. Although the descriptions of some components unrelated to the gist of the present disclosure will not be provided or will be provided briefly, the components whose descriptions are not provided herein do not necessarily mean components that are unnecessary in the present disclosure and may be combined and used by a person having ordinary skill in the technical field to which the present disclosure pertains.

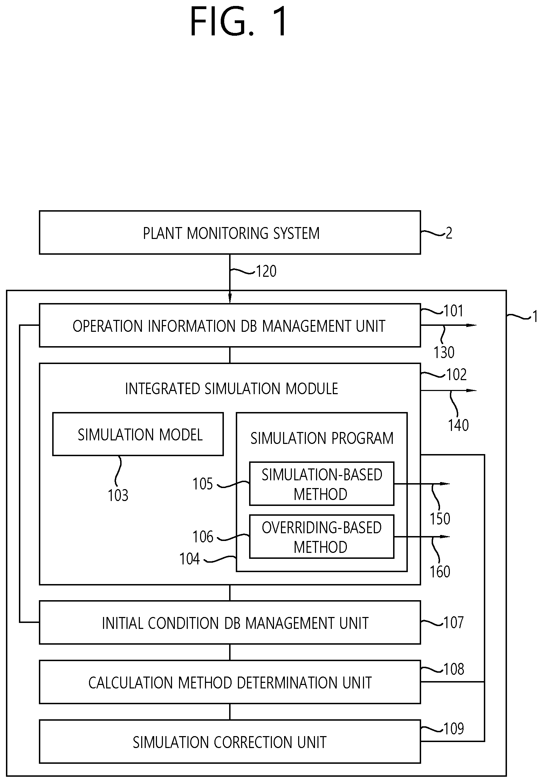

FIG. 1 is a block diagram for showing all components of a simulation system that brings field values of a power plant and tracks the status of the power plant in real time according to an embodiment of the present disclosure.

As shown in FIG. 1, the simulation system 1 that tracks the status of a power plant in real time based on field values of the power plant according to the present disclosure may include an operation information DB management unit 101, an integrated simulation module 102, an initial condition DB management unit 107, a calculation method determination unit 108, and a simulation correction unit 109.

First, the operation information DB management unit 101 may regularly receive an actual power plant operation information PI (120) from a plant monitoring system PMS (2) and store it, may output an operation information field value PI_DB (130) by refining the measured values of a power plant to eliminate bias or physical errors in the measurement equipment for the field values of all system devices in the power plant, for example, by correcting errors in the actual power plant operation information PI (120), which has been received, (specifically, by adjusting it to appropriate values for flow rate, momentum, energy balance, etc. of the power plant system or/and performing statistical processing such as calculating averages over time), and may select a variable from the operation information field value PI_DB (130), which is to be compared with a simulation calculation value 140 of the integrated simulation module 102.

The integrated simulation module 102 may output the simulation calculation value 140 by using a simulation program 104 for simulating the entire behavior of a power plant in real time based on a simulation model 103 obtained by modeling primary and secondary systems and devices, control logic, and electric power devices of the power plant. The simulation model 103 may include a physical model of a power plant, and the simulation program 104 may include a process of deriving converged field values through numerical analysis.

In addition, the simulation program 104 may include a simulation-based method105 where the operation information field value PI_DB (130) is predicted in real time and an overriding-based method106 that allows the real-time status of a power plant to be reflected in the simulation model 103 by inputting the main operation information field value (PI_DB) (130) as the boundary condition of the simulation model 103 in the integrated simulation module 102.

The overriding-based method 106 may include the process in which a separate solution model is repeatedly calculated to be automatically corrected so that, among the operation information field value PI_DB (130), a calculation field converged by inputting the measurement data of a main power plant as the boundary conditions of a corresponding system and a device model of the simulation model 103 matches operation data. As a result, it may be possible to automatically correct the simulation model 103 so that field values obtained through numerical analysis converge into a measured value and to improve fidelity by updating the simulation model 103 to reflect how a power plant is operated in real time.

When the simulation-based method 105 of the simulation program 104 is applied, the integrated simulation module 102 may output a calculation field value SIM_SM (150) of the simulation-based method as the simulation calculation value 140, and, when the overriding-based method 106 of the simulation program 104 is applied, the integrated simulation module 102 may output a calculation field value SIM_OM (160) of the overriding-based method as the simulation calculation value 140.

In order for the integrated simulation module 102 to perform simulation, the initial condition DB management unit 107 may model all system devices in a power plant and organize field values converged through numerical analysis, and may retrieve a field value closest to how the power plant is operated in real time and output it as the initial condition of the operation information field value PI_DB (130).

The calculation method determination unit 108 may analyze the difference between the operation information field value PI_DB (130) output by the operation information DB management unit 101 and the simulation calculation value 140 output by the integrated simulation module 102 and determine the calculation method of the simulation program 104 in the integrated simulation module 102 based on the size of the difference value. That is, when the difference between the operation information field value PI_DB (130) and the simulation calculation value 140 output by the integrated simulation module 102 is within a predetermined error range, the integrated simulation module 102 may be controlled to operate by the simulation-based method 105 and output the calculation field value SIM_SM (150) of the simulation-based method as the simulation calculation value 140, and the calculation method determination unit 108 may compare and analyze the calculation field value SIM_SM (150) of the simulation-based method and the operation information field value PI_DB (130).

In contrast, when the difference between the operation information field value PI_DB (130) and the simulation calculation value 140 output by the integrated simulation module 102 is outside a predetermined error range, the integrated simulation module 102 may be controlled to operate by the overriding-based method 106 and output the calculation field value SIM_OM (160) of the overriding-based method as the simulation calculation value 140, and the calculation method determination unit 108 may compare and analyze the calculation field value SIM_OM (160) of the overriding-based method and the operation information field value PI_DB (130).

When the simulation calculation value 140 and the operation information field value PI_DB (130) output by the integrated simulation module 102 are outside a predetermined error range, the simulation correction unit 109 may reflect the operation information field value PI_DB (130) and correct parameters related to the main variables of the simulation model 103 in the integrated simulation module 102.

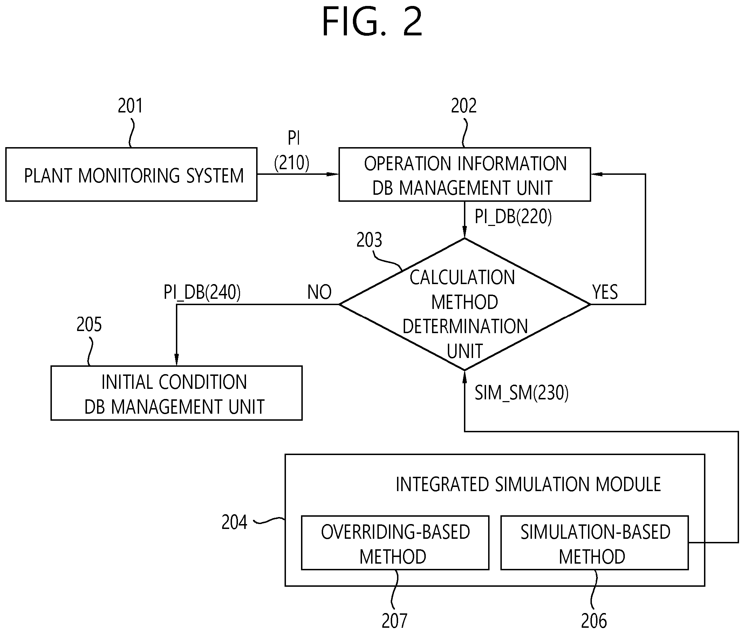

FIG. 2 is a flowchart for showing how the simulation system does calculations through a simulation-based method according to an embodiment of the present disclosure.

As shown in FIG. 2, an operation information DB management unit 202 may regularly receive an actual power plant operation information PI (210) from a plant monitoring system 201 and store it, may output an operation information field value PI_DB (220) to be compared with a calculation field value SIM_SM (230) of the simulation-based method calculated by an integrated simulation module 204, may correct errors in the actual power plant operation information PI (210), which has been received, that is, may adjust it to appropriate values for flow rate, momentum, energy balance, etc. of a power plant system or/and perform statistical processing such as calculating averages over time, and may select a variable, which is to be compared with the calculation field value SIM_SM (230) of the simulation-based method, which has been output by the integrated simulation module 204.

The integrated simulation module 204 may output the calculation field value SIM_SM (230) of the simulation-based method and transmit it to a calculation method determination unit 203.

The calculation method determination unit 203 may receive, compare, and analyze the calculation field value SIM_SM (230) of the simulation-based method and the operation information field value PI_DB (220), and, when the calculation field value SIM_SM (230) of the simulation-based method and the operation information field value PI_DB (220) are within a predetermined error range, the calculation method determination unit 203 may allow the integrated simulation module 204 to predict the behavior of a power plant while continuing calculations based on a simulation-based method 206.

In contrast, when determining that the calculation field value SIM_SM (230) of the simulation-based method and the operation information field value PI_DB (220) are outside a predetermined error range, the calculation method determination unit 203 may switch the calculation method of the integrated simulation module 204 from the simulation-based method 206 to an overriding-based method 207, and may output the operation information field value PI_DB (220) to an initial condition DB management unit 205.

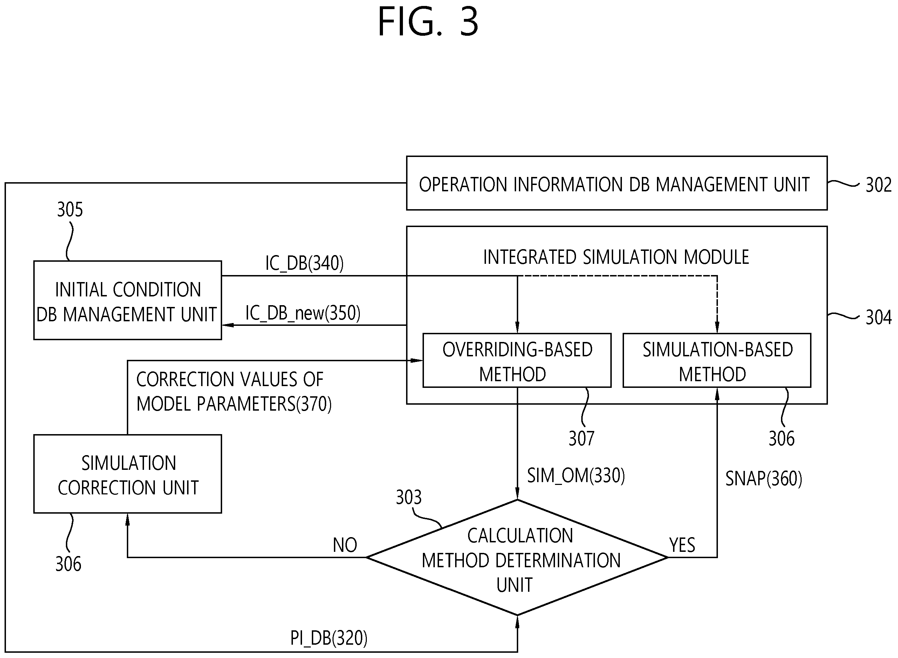

FIG. 3 is a flowchart for showing how the simulation system does calculations through an overriding-based method according to an embodiment of the present disclosure.

As shown in FIG. 3, an initial condition DB management unit 305 may retrieve simulation initial conditions with accuracy within a predetermined range from an operation information field value PI_DB, which has been received, and may provide an initial condition field value IC_DB (340) to an integrated simulation module 304.

When starting to do calculations by an overriding-based method 307, the integrated simulation module 304 may select, as the initial condition field value, the value closer to the operation information field value PI_DB among the initial condition field value IC_DB (340) provided by the initial condition DB management unit 305 and the most recent field value calculated by a simulation-based method 306 immediately before switching to the overriding-based method 307.

The integrated simulation module 304 may do calculations based on the overriding-based method 307, may input the value matching a main variable among the operation information field values PI_DB as a target value, which is a virtual boundary condition for the main variable of the simulation model 103, and may start to do calculations with the initial condition field value and then continue to do calculations by receiving correction values 370 of the model parameters related to the main variable of the simulation model from a simulation correction unit 306 so that the main variable converges to the target value of the operation information field. In addition, the integrated simulation module 304 may output a calculation field value SIM_OM (330) of the overriding-based method, which has been calculated by the overriding-based method 307, to a calculation method determination unit 303.

The calculation method determination unit 303 may analyze a main variable by comparing it with an operation information field value PI_DB (320) and determine whether the main variable has converged to a target value by the overriding-based method 307.

The simulation correction unit 306 may transmit the correction value 370 of the model parameters related to a main variable to the integrated simulation module 304, so that the simulation model 103 may reflect the operation information field value based on the results of analyzing the operation information field value PI_DB (320) and the calculation field value SIM_OM (330) of the overriding-based method.

Next, when main variables have converged to a target value with accuracy within a predetermined range, the calculation method determination unit 303 may transmit a SNAP (360) command to the integrated simulation module 304, and the integrated simulation module 304 may define a field value converged by the simulation model 103 as a new initial condition IC_DB_new (350) and output the new initial condition IC_DB_new (350) to the initial condition DB management unit 305.

The integrated simulation module 304 may repeat the process of tracking the information on the operation of a power plant in real time by the simulation-based method 306 or the overriding-based method 307 based on the new initial condition IC_DB_new (350).

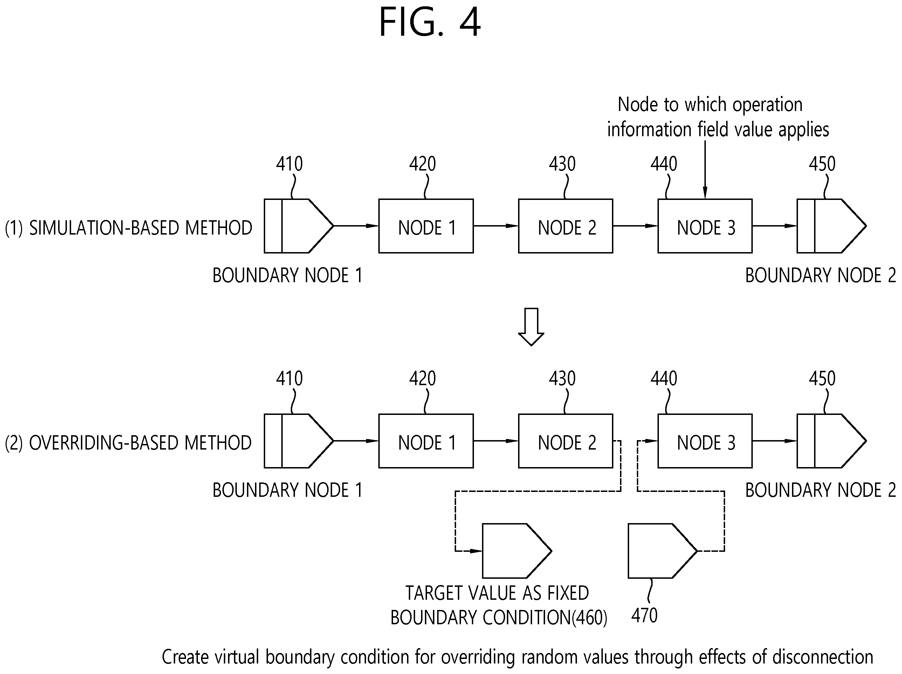

FIG. 4 is a flowchart for showing how an integrated simulation module brings information on the operation of a power plant when the simulation system does calculations through the overriding-based method according to an embodiment of the present disclosure.

As shown in FIG. 4, when the simulation model (not shown) in the integrated simulation module 305 in FIG. 3 includes nodes 1, 2, and 3 (420, 430, and 440) and boundary nodes 1 and 2 (410 and 450) and an operation information field value as a main variable is to be applied to node 3 (440) as a target value while the integrated simulation module 305 in FIG. 3 is doing calculations based on the simulation-based method (1), virtual boundary nodes 1 and 2 (460 and 470) may be created between node 2 (430), which is located previously in the flow of calculation information, and node 3 (440) while the integrated simulation module 304 in FIG. 3 is doing calculations based on the overriding-based method (2). Virtual boundary node 1 (460) and virtual boundary node 2 (470) may be disconnected from each other and may not affect each other during the simulation calculation process. In addition, the target value applied to node 3 (440) may be input as a fixed boundary condition to virtual boundary node 1 (460) connected to node 2 (430). Furthermore, the boundary condition of virtual boundary node 2 (470) connected to node 3 (440) may be set to be the same as that of node 3 (440).

When the overriding-based method (2) is applied, to allow calculations to be done, the simulation correction unit 306 in FIG. 3 may provide correction values for model parameters related to the main variables of the simulation model, so that node 3 (440) converges to the target value of the operation information field.

### [Detailed Description of Main Elements]

1: simulation system
2 and 201: plant monitoring system PI
101, 202, and 302: operation information DB management unit
102, 204, and 304: integrated simulation module
107, 205, and 305: initial condition DB management unit
108, 203, and 303: calculation method determination unit
109 and 306: simulation correction unit
410 and 450: boundary node
420, 430, 440, 460, and 470: node

## Claims

1. A simulation system for tracking the status of a power plant in real time, comprising:
an operation information DB management unit that collects power plant field values at an nth time point - the "n" is an integer;
an integrated simulation module that simulates the behavior of a power plant based on field values converged by numerical analysis of a power plant model using the power plant field values at the nth time point as input;
an initial condition DB management unit that retrieves the power plant field values at the nth time point and converged field values meeting conditions within a predetermined range from the field values converged by the numerical analysis of the power plant model and provides the converged field values as an initial condition field value of the simulation of the integrated simulation module;
a calculation method determination unit that determines a calculation method for the simulation of the integrated simulation module based on the results of comparing the power plant field values at the nth time point and the simulation calculation value of the integrated simulation module; and
a simulation correction unit that reflects the power plant field values at the nth time point and corrects parameters related to the main variables of a simulation model in the integrated simulation module when the difference between the power plant field value at the nth time point and the simulation calculation value of the integrated simulation module is outside a predetermined error range,
wherein examples of the simulation calculation method include a simulation-based method where the power plant field values at the nth time point are predicted in real time and an overriding-based method where the corrected parameters of the simulation model are applied so that the field values converged by the numerical analysis of the power plant model match the power plant field values at the nth time point.

2. The system of claim 1, wherein the operation information DB management unit selects a variable to be compared with the simulation calculation value from the power plant field values at the nth time point and removes errors in equipment that measures the power plant field values at the nth time point by correcting the selected variable.

3. The system of claim 1, wherein the integrated simulation module includes primary and secondary systems, control logic, and electricity and power models in a power plant and includes a simulator for training operators that simulates the entire behavior of the power plant in real time.

4. The system of claim 1, wherein, when starting to do calculations by the overriding-based method, the integrated simulation module selects, as the initial condition field value of the simulation, the field value closer to the power plant field value at the nth time point among the initial condition field value provided by the initial condition DB management unit and the field value calculated by the simulation-based method before switching to the overriding-based method.

5. The system of claim 1, wherein, when the overriding-based method is applied, the initial condition DB management unit retrieves a field value with accuracy within a predetermined range from the power plant field values at the nth time point, which have been provided by the operation information DB management unit, and defines the searched filed value as a first initial condition and provides it to the integrated simulation module.

6. The system of claim 1, wherein, when the overriding-based method is applied, the integrated simulation module inputs a field value matching the main variable among the power plant field values at the nth time point as a virtual boundary condition for the main variable of the simulation model, starts to do calculations with the initial condition field value, and does the calculations by receiving correction values of parameters related to the main variable of the simulation model from the simulation correction unit so that the main variable converges to the virtual boundary condition.

7. The system of claim 1, wherein, when the overriding-based method is applied, the integrated simulation module also does calculations repeatedly while adjusting parameters related to the variables of the simulation model based on the first initial condition provided by the simulation correction unit until the variables of the simulation model converge to the power plant field values at the nth time point corresponding to the variables of the simulation model.

8. The system of claims 1 to 7, wherein, when the variables of the simulation model converge to the power plant field values at the nth time point corresponding to the variables with an accuracy within a predetermined range based on the first initial condition, the calculation method determination unit outputs the variables as a second initial condition of the simulation model and provides them to the initial condition DB management unit.

9. The system of claims 1 to 8, wherein the integrated simulation module performs simulation based on the second initial condition provided by the initial condition DB management unit and the power plant field values received at an n+1th time point.

10. A simulation method for tracking the status of a power plant in real time, comprising:
collecting operation information through an operation information DB management unit collecting power plant field values at an nth time point;
simulating the behavior of a power plant based on field values converged by numerical analysis of a power plant model using the power plant field values at the nth time point as input, through an integrated simulation module;
searching for the power plant field values at the nth time point and converged field values meeting conditions within a predetermined range from the field values converged by the numerical analysis of the power plant model and providing the converged field values as an initial condition field value of the simulation of the integrated simulation module, through an initial condition DB management unit that;
determining a calculation method for the simulation of the integrated simulation module based on the results of comparing the power plant field values at the nth time point and the simulation calculation value of the integrated simulation module, through a calculation method determination unit; and
reflecting the power plant field values at the nth time point and correcting parameters related to the main variables of a simulation model in the integrated simulation module through a simulation correction unit when the difference between the power plant field value at the nth time point and the simulation calculation value of the integrated simulation module is outside a predetermined error range,
wherein examples of the simulation calculation method include a simulation-based method where the power plant field values at the nth time point are predicted in real time and an overriding-based method where the corrected parameters of the simulation model are applied so that the field values converged by the numerical analysis of the power plant model match the power plant field values at the nth time point.

11. The method of claim 10, wherein the collecting of operation information includes selecting a variable to be compared with the simulation calculation value from the power plant field values at the nth time point and removing errors in equipment that measures the power plant field values at the nth time point by correcting the selected variable.

12. The method of claim 10, wherein the integrated simulation module includes primary and secondary systems, control logic, and electricity and power models in a power plant and includes a simulator for training operators that simulates the entire behavior of the power plant in real time.

13. The method of claim 10, wherein, when starting to do calculations by the overriding-based method, the integrated simulation module selects, as the initial condition field value of the simulation, the field value closer to the power plant field value at the nth time point among the initial condition field value provided by the initial condition DB management unit and the field value calculated by the simulation-based method before switching to the overriding-based method.

14. The method of claim 10, wherein, when the overriding-based method is applied, the initial condition DB management unit retrieves a field value with accuracy within a predetermined range from the power plant field values at the nth time point, which have been provided by the operation information DB management unit, and defines the searched filed value as a first initial condition and provides it to the integrated simulation module.

15. The method of claim 10, wherein, when the overriding-based method is applied, the integrated simulation module inputs a field value matching the main variable among the power plant field values at the nth time point as a virtual boundary condition for the main variable of the simulation model, starts to do calculations with the initial condition field value, and does the calculations by receiving correction values of parameters related to the main variable of the simulation model from the simulation correction unit so that the main variable converges to the virtual boundary condition.

16. The method of claim 10, wherein, when the overriding-based method is applied, the integrated simulation module also does calculations repeatedly while adjusting parameters related to the variables of the simulation model based on the first initial condition provided by the simulation correction unit until the variables of the simulation model converge to the power plant field values at the nth time point corresponding to the variables of the simulation model.

17. The method of claims 10 to 16, comprising outputting the variables of the simulation model as a second initial condition of the simulation model and providing them to the initial condition DB management unit when the variables of the simulation model converge to the power plant field values at the nth time point corresponding to the variables with an accuracy within a predetermined range based on the first initial condition.

18. The method of claims 10 to 17, wherein the integrated simulation module performs simulation based on the second initial condition provided by the initial condition DB management unit and the power plant field values received at an n+1th time point.
